# FASCICULE DE BREVET EUROPEEN

(11) **EP 1 284 876 B1**
(45) Date de publication et mention de la délivrance du brevet: **30.06.2004**
(21) Numéro de dépôt: 01925646.0
(22) Date de dépôt: 13.04.2001
(51) Int. Cl.: B60G 15/06

(54) **DISPOSITIF DE BUTEE DE SUSPENSION**
AXIALWÄLZLAGER FÜR EINE FAHRZEUGAUFHÄNGUNG
SUSPENSION STOP DEVICE

(30) Priorité: 30.05.2000 FR 0006886
(43) Date de publication de la demande: 26.02.2003
(73) Titulaire: SNR ROULEMENTS, 74010 Annecy Cédex (FR)
(72) Inventeur: CHESNE, Jean, F-74370 Villaz (FR)
(74) Mandataire: Srour, Elie
(86) Numéro de dépôt international: PCT/FR2001/001148
(87) Numéro de publication internationale: WO 2001/092040

(56) Documents cités:
- US-A- 5 467 971

## Description

La présente invention concerne un dispositif de butée de suspension, destiné notamment aux systèmes de suspension de type MacPHERSON au niveau des roues directrices d'un véhicule automobile.

Les dispositifs de suspension des véhicules automobiles comportent généralement un roulement de butée de suspension ayant pour fonction de transmettre les efforts axiaux et radiaux résultant de la compression du ressort et d'autoriser en même temps une rotation pratiquement sans frottement entre le ressort et le corps du véhicule, ce mouvement de rotation du ressort se produisant lors du braquage des roues directrices et lors des variations de compression du ressort par un effet d'enroulement des spires.

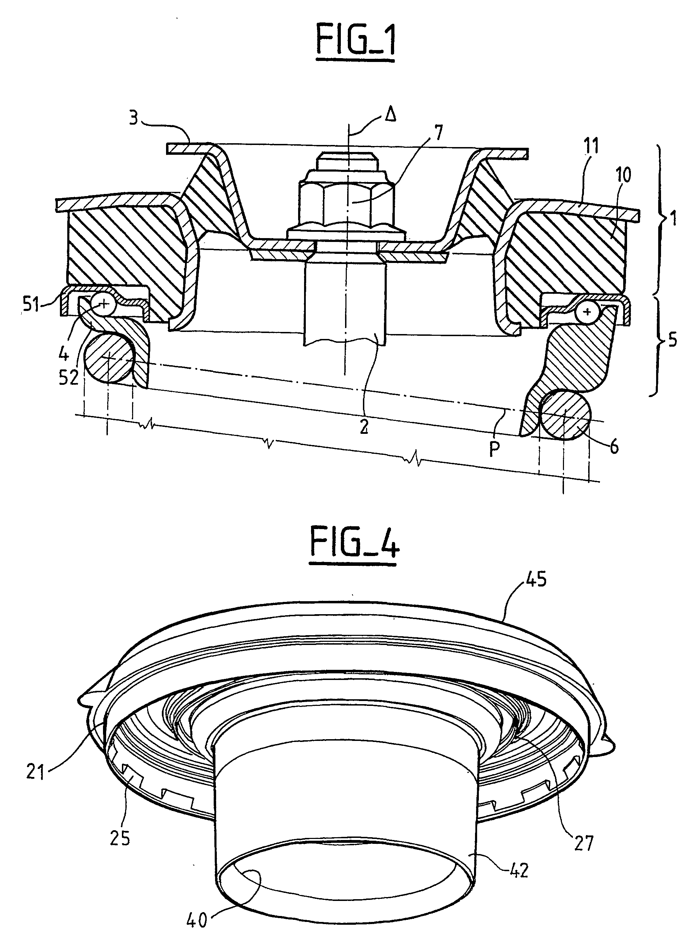

Une solution actuelle, dont une vue en coupe axiale est représentée sur la figure 1, comporte généralement deux composants, un bloc filtrant 1, destiné à filtrer les mouvements de la tige d'amortisseur 2 et du ressort 6 par rapport à la caisse 3 du véhicule suivant l'axe Δ de la tige, et un roulement à billes 4, maintenues dans un boîtier 5, destiné à transmettre les déplacements du ressort 6 dans un plan P.

Le bloc filtrant 1 est constitué de caoutchouc 10 ou élastomère, adhérisé sur une armature 11 en tôle métallique. Il est solidaire de la caisse 3 avec laquelle il est en contact par vis ou autre moyen.

Le roulement à billes 4 est logé entre deux bagues de roulement 5 formant un boîtier, en acier par exemple, la bague supérieure 51 étant fixe et solidaire du véhicule alors que la bague inférieure 52 est mobile en rotation. Cette bague inférieure 52 sert de plus d'appui au ressort de suspension 6 du dispositif.

La tige d'amortisseur 2 est fixée au bloc filtrant par un écrou 7.

Cette structure actuelle d'un dispositif de butée de suspension présente un assez grand nombre de pièces de nature différente, qui doivent être fabriquées puis assemblées, ce qui réalise un dispositif relativement complexe et coûteux.

La présente invention propose de remplacer la structure actuelle du bloc filtrant en métal sur lequel adhère du caoutchouc par une structure en thermoplastique remplissant en plus du filtrage des vibrations et du bruit, la fonction de boîtier de roulement à billes et la fonction de butée de choc, ce qui réduit le nombre de pièces du dispositif de butée de suspension et donc son prix de revient. Un dispositif de butée de suspension selon les caractéristiques du préambule de la revendication 1 est connu de US-A-5,467,971.

Pour cela, l'objet de l'invention selon la revendication 1 est un dispositif de butée de suspension pour les roues motrices d'un véhicule automobile, comprenant d'une part un bloc filtrant, composé d'un carter supérieur fixe par rapport à la caisse du véhicule et coopérant avec un carter inférieur mobile en rotation autour d'une tige d'amortisseur et servant d'appui à un ressort de suspension, et d'autre part un roulement à billes, lesdits carters supérieur et inférieur étant réalisés en matériau thermoplastique et présentent des faces en regard qui sont creusées circulairement, autour de l'axe de rotation de la tige d'amortisseur, pour recevoir un chemin de roulement au roulement à billes, le carter supérieur intégrant de plus une butée de choc moulée autour de la butée d'attaque du dispositif d'amortissement, et la structure thermoplastique du carter supérieur est renforcée par une couronne en élastomère surmoulé.

Selon une autre caractéristique, les deux carters supérieur et inférieur du bloc filtrant sont en matériau thermoplastique renforcé par des fibres de verre.

D'autres caractéristiques et avantages de l'invention apparaîtront à la lecture de la description d'un mode de réalisation illustrée par les figures suivantes qui sont, outre la figure 1 déjà décrite :
- la figure 2 : une vue en coupe axiale d'un dispositif de butée de suspension selon l'invention ;
- la figure 3 : une vue partielle en coupe axiale du bloc filtrant du dispositif selon la figure 2 ;
- la figure 4 : une vue en perspective du carter supérieur du bloc filtrant selon l'invention.

Les différents éléments portant les mêmes références sur les différentes figures remplissent les mêmes fonctions en vue des mêmes résultats.

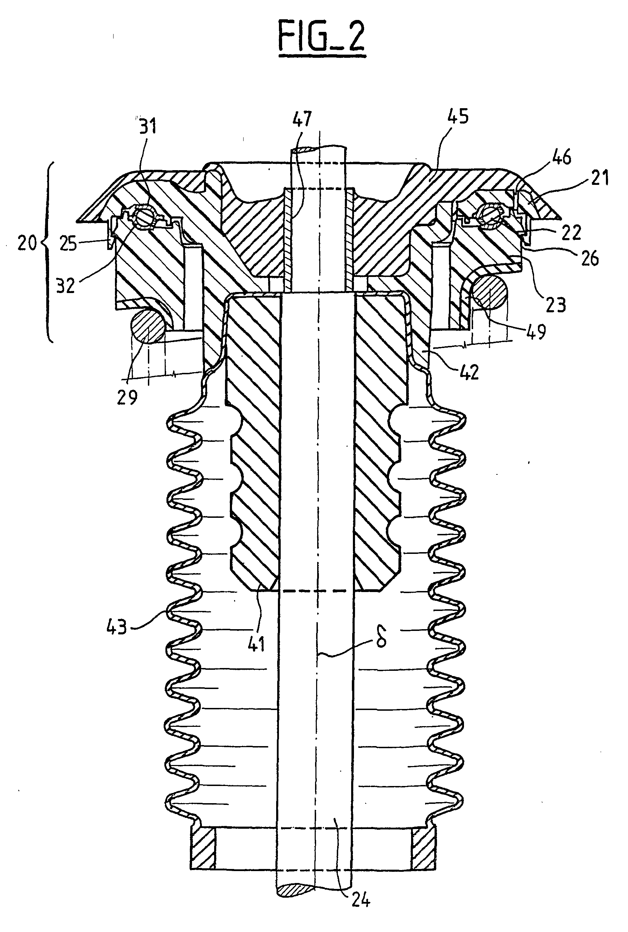

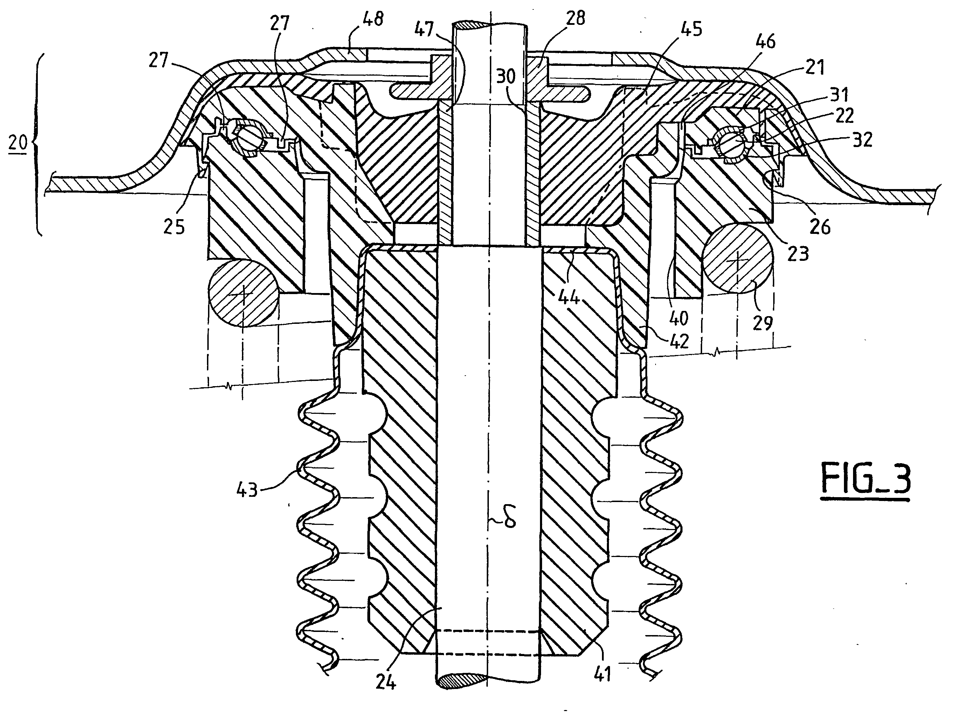

Comme le montrent les figures 2 et 3, un dispositif de butée de suspension, pour les roues directrices d'un véhicule automobile, comporte un bloc filtrant 20 réalisé en matériau thermoplastique, de type polyamide 6, qui peut être chargé de fibres de verre pour renforcer la structure. Ce bloc filtrant est constitué d'un carter supérieur 21 et d'un carter inférieur 23, dont les faces en regard sont creusées circulairement pour réaliser la fonction supplémentaire de chemin de roulement pour le roulement à billes 22, logé entre ces deux carters, qui sont des pièces de révolution autour de l'axe δ de la tige d'amortisseur 24. Il est possible d'insérer un chemin de roulement métallique en deux parties, l'une supérieure 31 et l'autre inférieure 32 logées respectivement contre les faces en regard des carters supérieur et inférieur, servant de cage plus rigide aux billes 22. Ce chemin de roulement peut être en tôle emboutie.

Pour maintenir solidaires ces deux carters, l'un en dessous de l'autre, le carter supérieur 21 est doté d'une pluralité de clips ou ergots 25 à sa périphérie, coopérant avec une rainure 26 creusée sur le pourtour du carter inférieur 23.

Le roulement à billes 22 assure la rotation du carter inférieur 23 par rapport au carter supérieur 21 grâce à un lubrifiant dans lequel baigne les billes. Pour éviter que ce lubrifiant ne coule hors du chemin de roulement et que des poussières ou de la boue ne viennent le polluer, les faces en regard des deux carters présentent chacune au moins une chicane circulaire 27 coopérant avec celle de l'autre carter pour réaliser au moins un joint d'étanchéité.

Le carter supérieur 21 du bloc filtrant 20 est évidemment percé par une ouverture centrale 30 le long de l'axe de la tige d'amortisseur 24, selon un diamètre ajusté à celui de ladite tige autour de laquelle il est placé.

Le carter supérieur 21 du bloc filtrant remplit une troisième fonction, celle de butée de choc, bloquant progressivement l'enfoncement du corps de l'amortisseur contre une butée d'attaque 41 quand ce dernier arrive en extrémité de débattement. A cet effet, le carter supérieur présente une base moulée 42 jouant le rôle de butée de choc, dont l'alésage a un diamètre qui est supérieur à celui de sa partie supérieure selon un mode de réalisation pour entourer la butée d'attaque 41.

Le carter inférieur 23 du bloc filtrant sert également d'appui à l'extrémité supérieure du ressort de suspension 29 du dispositif, et il est percé d'une ouverture 40, de diamètre supérieur à celui de l'ouverture 30 du carter supérieur 21 dans le but de permettre le logement de la butée de choc 42 du carter supérieur 21. La portée d'appui en contact avec le ressort peut être recouverte d'une semelle 49 en élastomère.

Un soufflet 43 de protection entoure la tige d'amortisseur 24 ainsi que la butée d'attaque 41, et son extrémité supérieure 44 est coincée entre le sommet de cette butée d'attaque et le carter supérieur 21.

Pour améliorer le caractère filtrant du bloc 20 ainsi réalisé en plastique, la structure en plastique du carter supérieur 21 est renforcée par une couronne 45 en caoutchouc ou élastomère surmoulé, comportant un alésage axial adapté au diamètre de la tige d'amortisseur 24. Cette couronne filtre avantageusement les vibrations et les bruits. Elle est fixée au carter supérieur 21 en plastique par adhésion ou par collage.

Afin d'assurer l'étanchéité du chemin de roulement à billes 22, la couronne 45 en caoutchouc présente au moins six puits 46, disposés par groupe de deux puits selon trois rayons espacés de 120°. Ces puits sont destinés à être logés dans six canaux percés verticalement dans le carter supérieur 21 du bloc filtrant 20 et ainsi à réaliser deux anneaux d'étanchéité concentriques. Ces puits sont surmoulés en même temps que la couronne, lors de sa fabrication. De plus, ces canaux servent de points d'ancrage de la couronne en caoutchouc sur la partie supérieure du carter supérieur 21 du bloc filtrant.

La figure 4 est une vue de dessous, en perspective, du carter supérieur 21 en thermoplastique.

Pour maintenir la tige d'amortisseur 24 à la caisse 48 du véhicule par un écrou 28 serré autour de son axe δ, il est nécessaire de placer une entretoise 47 métallique cylindrique le long de la tige 24, entre celle-ci et le carter supérieur 21 et la couronne en caoutchouc 45 du bloc filtrant 20.

Un dispositif de butée de suspension réalisé selon l'invention est composé d'un nombre réduit de pièces faciles à réaliser et à assembler. L'intérêt de remplacer un bloc filtrant en caoutchouc et tôle métallique par du caoutchouc adhérisé sur une structure en thermoplastique supprime les problèmes de corrosion et diminue le poids de l'ensemble du dispositif.

## Revendications

1. Dispositif de butée de suspension, pour les roues motrices d'un véhicule automobile, comprenant d'une part un bloc filtrant, composé d'un carter supérieur fixe par rapport à la caisse du véhicule et coopérant avec un carter inférieur mobile en rotation autour d'une tige d'amortisseur et servant d'appui à un ressort de suspension, et d'autre part un roulement à billes, lesdits carters supérieur (21) et inférieur (23) étant réalisés en matériau thermoplastique et présentent des faces en regard qui sont creusées circulairement, autour de l'axe (δ) de rotation de la tige d'amortisseur (24), pour recevoir un chemin de roulement destiné au roulement à billes (22), **caractérisé en ce que** le carter supérieur (21) intégrant de plus une butée de choc (42) moulée autour de la butée d'attaque (41) du dispositif d'amortissement, et **en ce que** la structure thermoplastique du carter supérieur (21) est renforcée par une couronne (45) en élastomère surmoulé.

2. Dispositif de butée de suspension selon la revendication 1, **caractérisé en ce que** les deux carters supérieur (21) et inférieur (23) du bloc filtrant (20) sont en matériau thermoplastique renforcé par des fibres de verre.

3. Dispositif de butée de suspension selon l'une des revendications 1 ou 2, **caractérisé en ce que** le carter supérieur (21) du bloc filtrant (20) est doté d'une pluralité de clips (25) à sa périphérie destinés à coopérer avec une rainure (26) creusée sur le pourtour du carter inférieur (23).

4. Dispositif de butée de suspension selon l'une des revendications 1 ou 2, **caractérisé en ce que** les faces en regard des carters supérieur (21) et inférieur (23) du bloc filtrant (20) présentent chacune au moins une chicane circulaire (27) coopérant avec celle de l'autre carter pour réaliser au moins un joint d'étanchéité.

5. Dispositif de butée de suspension selon l'une des revendications 1 à 4, **caractérisé en ce que** le carter supérieur (21) du bloc filtrant présente une base moulée jouant le rôle de butée de choc, dont l'alésage a un diamètre supérieur à celui de sa partie supérieure entourant la tige d'amortisseur (24), de façon à entourer la butée d'attaque (41 ).

6. Dispositif de butée de suspension selon la revendication 1, **caractérisé en ce que** la couronne (45) en élastomère, renforçant le carter supérieur (21) du bloc filtrant (20), présente au moins six puits (46) disposés par groupe de deux puits selon trois rayons espacés de 120°, destinés à être logés dans six canaux percés verticalement dans le carter supérieur (21) en matériau thermoplastique pour former deux joints d'étanchéité concentriques.

7. Dispositif de butée de suspension selon la revendication 1, **caractérisé en ce qu'**un chemin de roulement en métal est inséré entre les deux carters supérieur (21) et inférieur (23) du bloc filtrant (20) au niveau du creux circulaire, ce chemin étant constitué de deux parties supérieure (31) et inférieure (32) logées respectivement contre les faces en regard des deux carters.

8. Dispositif de butée de suspension selon la revendication 1, **caractérisé en ce qu'**une entretoise (47) métallique cylindrique est placée le long de la tige d'amortisseur (24), entre celle-ci d'une part et le carter supérieur (21) et la couronne (45) en élastomère du bloc filtrant (20) d'autre part, et **en ce qu'**un écrou (28) est serré autour de l'axe (δ) de la tige (24) pour fixer le carter supérieur (21) à la caisse (48) du véhicule.

## Patentansprüche

1. Axiallagervorrichtung einer Rad-Aufhängung für die Antriebsräder eines Kraftfahrzeugs aufweisend einerseits einen filternden Block, welcher aus einem oberen Gehäuse, welches fest im Verhältnis zu der Karosserie des Fahrzeugs ist, und welches mit einem unteren Gehäuse zusammenwirkt, welches in Drehung um eine Dämpferstange beweglich ist, und welches als Anschlag für eine Aufhängungsfeder dient, und andererseits ein Kugellager, wobei das obere Gehäuse (21) und das untere Gehäuse (23) aus einem thermoplastischen Material realisiert sind und gegenüberliegende Flächen aufweisen, welche kreisförmig um die Drehachse (δ) der Dämpferstange (24) herum vertieft sind, um eine Lagerbahn aufzunehmen, welche für das Kugellager (22) bestimmt ist, **dadurch gekennzeichnet, dass** das obere Gehäuse (21) des Weiteren einen Stoßanschlag (42) integriert, welcher um den Eingriffsanschlag (41) der Dämpfervorrichtung herum angegossen ist und dass die thermoplastische Struktur des oberen Gehäuses (21) durch eine Krone (45) aus angegossenem Elastomer verstärkt ist.

2. Axiallagervorrichtung einer Rad-Aufhängung nach Anspruch 1, **dadurch gekennzeichnet, dass** die zwei Gehäuse, das obere Gehäuse (21) und das untere Gehäuse (23), des filternden Blocks (20) aus einem thermoplastischen Material, welches durch Glasfasern verstärkt ist, bestehen.

3. Axiallagervorrichtung einer Rad-Aufhängung nach einem der Ansprüche 1 oder 2, **dadurch gekennzeichnet, dass** das obere Gehäuse (21) des filternden Blocks (20) mit einer Mehrzahl von Klipps (25) an seiner Peripherie versehen ist, welche dafür bestimmt sind, mit einer hohlen Nut (26) am Umfang des unteren Gehäuses (23) zusammenzuwirken.

4. Axiallagervorrichtung einer Rad-Aufhängung nach einem der Ansprüche 1 oder 2, **dadurch gekennzeichnet, dass** die gegenüberliegenden Flächen des oberen Gehäuses (21) und des unteren Gehäuses (23) des filternden Blocks (20) jeweils mindestens eine kreisförmige Sperre (27) aufweisen, welche mit derjenigen des anderen Gehäuses zum Realisieren von mindestens einer Dichtung zusammenwirken.

5. Axiallagervorrichtung einer Rad-Aufhängung nach einem der Ansprüche 1 bis 4, **dadurch gekennzeichnet, dass** das obere Gehäuse (21) des filternden Blocks eine gegossene Basis aufweist, welche die Funktion eines Stoßanschlags spielt, deren Bohrung einen größeren Durchmesser aufweist als derjenige ihres oberen Teils, welcher die Dämpferstange (24) umgibt, in einer Art und Weise, um den Eingriffsanschlag (41) zu umgeben.

6. Axiallagervorrichtung einer Rad-Aufhängung nach Anspruch 1, **dadurch gekennzeichnet, dass** die Krone (45) aus Elastomer, welche das obere Gehäuse (21) des filternden Blocks (20) verstärkt, mindestens sechs Bohrungen (46) aufweist, welche in Gruppen von zwei Bohrungen gemäß drei voneinander beabstandeten Radien von 120° angeordnet sind, welche dafür bestimmt sind, in sechs Kanälen aufgenommen zu werden, welche vertikal in dem oberen Gehäuse (21) aus thermoplastischem Material gebohrt sind, um zwei konzentrische Dichtungen zu bilden.

7. Axiallagervorrichtung einer Rad-Aufhängung nach Anspruch 1, **dadurch gekennzeichnet, dass** eine Lagerbahn aus Metall zwischen die zwei Gehäuse, dem oberen Gehäuse (21) und dem unteren Gehäuse (23), des filternden Blocks (20) auf Höhe der kreisförmigen Vertiefung eingesetzt ist, wobei diese Bahn aus zwei Teilen, einem oberen Teil (31) und einem unteren Teil (32) gebildet ist, welche jeweils gegen die gegenüberliegenden Flächen der zwei Gehäuse aufgenommen sind.

8. Axiallagervorrichtung einer Rad-Aufhängung nach Anspruch 1, **dadurch gekennzeichnet, dass** eine metallische, zylindrische Distanzhülse (47) entlang der Dämpferstange (24) zwischen diese einerseits und das obere Gehäuse (21) und die Krone (45) aus Elastomer des filternden Blocks (20) andererseits eingesetzt ist, und dass eine Mutter (28) fest um die Achse (δ) der Stange (24) geschraubt ist, um das obere Gehäuse (21) an der Karosserie (48) des Fahrzeugs zu befestigen.

## Claims

1. A suspension stop device for the drive wheels of a motor vehicle, including on the one hand a filtering block comprising an upper casing fixed with respect to the body of the vehicle and co-operating with a lower casing rotationally movable about a damper rod and serving as a support for a suspension spring, and on the other hand a ball bearing assembly, said upper (21) and lower (23) casings being made of thermoplastic material and have mutually facing faces which are hollowed circularly around the axis (δ) of rotation of the damper rod (24) to receive a raceway for the ball bearing assembly (22), **characterised in that** the upper casing (21) also integrates an impact stop (42) moulded around the bump stop (41) of the damper device, and that the thermoplastic structure of the upper casing (21) is reinforced by a ring (45) of elastomer moulded thereover.

2. A suspension stop device according to claim 1 **characterised in that** the two upper (21) and lower (23) casings of the filtering block (20) are of fibreglass-reinforced thermoplastic material.

3. A suspension stop device according to one of claims 1 and 2 **characterised in that** the upper casing (21) of the filtering block (20) is provided with a plurality of clips (25) at its periphery, which are intended to co-operate with a groove (26) provided on the periphery of the lower casing (23).

4. A suspension stop device according to one of claims 1 and 2 **characterised in that** the mutually facing faces of the upper (21) and lower (23) casings of the filtering block (20) each have at least one circular baffle (27) co-operating with that of the other casing to provide at least one seal.

5. A suspension stop device according to one of claims 1 to 4 **characterised in that** the upper casing (21) of the filtering block has a moulded base acting as an impact stop, the bore of which is of a larger diameter than that of its upper part surrounding the damper rod (24), in such a way as to surround the bump stop (41).

6. A suspension stop device according to claim 1 **characterised in that** the elastomer ring (45) which reinforces the upper casing (21) of the filtering block (20) has at least six wells (46) disposed in groups of two wells on three radii spaced by 120° which are intended to be accommodated in six passages which are pierced vertically in the upper casing (21) of thermoplastic material to form two concentric seals.

7. A suspension stop device according to claim 1 **characterised in that** a metal raceway is inserted between the two upper (21) and lower (23) casings of the filtering block (20) at the level of the circular hollow, said raceway comprising two upper (31) and lower (32) parts which are respectively accommodated against the mutually facing faces of the two casings.

8. A suspension stop device according to claim 1 **characterised in that** a cylindrical metal spacer (47) is placed along the damper rod (24) between same on the one hand and the upper casing (21) and the elastomer ring (45) of the filtering block (20) on the other hand, and that a nut (28) is tightened around the axis (δ) of the rod (24) to fix the upper casing (21) to the body (48) of the vehicle.
